# EUROPEAN PATENT SPECIFICATION

(11) **EP 0 346 154 B1**
(45) Date of publication and mention of the grant of the patent: **02.03.1994**
(21) Application number: 89305916.2
(22) Date of filing: 12.06.1989
(51) Int. Cl.: B60R 13/02, B60R 16/02

(54) **Modular headliner including a wire harness**
Modulare Dachverkleidung mit einer elektrischen Verkabelung
Garniture de toit modulaire comprenant un câblage électrique

(30) Priority: 10.06.1988 US 205131
(43) Date of publication of application: 13.12.1989
(73) Proprietor: UNITED TECHNOLOGIES AUTOMOTIVE, Inc., Dearborn Michigan 48126 (US)
(72) Inventor: Dowd, James D., Farmington Hills Michigan 48018 (US); McGarry, Stephen P., Rochester Hills Michigan 48309 (US); Hampton, Darrel, Farmington Hill Michigan 48024 (US)
(74) Representative: Gilding, Martin John

(56) References cited:
- EP-A- 0 088 931
- EP-A- 0 203 484
- DE-A- 3 442 877
- DE-C- 3 636 364
- US-A- 4 352 522

## Description

The present invention is directed to a modular headliner incorporating a variety of components which are all assembled to a motor vehicle as a unitary assembly, one of which components includes a wire harness assembly.

Headliners are currently assembled to motor vehicles in a series of steps at a plurality of stations on a vehicle assembly line. The individual components of the headliner which require electricity as a power source or to provide a signal for indicating a condition are individually connected to the vehicle body electrical system at the time of assembly. The various wires are located between the substrate forming the headliner and the roof of the vehicle.

When the wires are located between the substrate and the roof, they sometimes contact the roof structural supports which provide the necessary roll over protection and other structural integrity to the vehicle body structure in the roof area. This contact between the wire and the vehicle body structure has resulted on occasion in the wire being pinched, cut or having the insulation rubbed off to cause a short circuit as the wire rubs against the vehicle body structure.

EP-A-88931 discloses a modular headliner assembly and forms the basis of the classifying portion of claim 1. EP-A3-88931 does not disclose any electrical component, and consequently does not provide for the supply of electrical power to electrical components.

It is an object of the present invention to provide a unitary modular headliner incorporating a wire harness for electrically interconnecting various components of a modular headliner and a vehicle electrical system.

It is a further object of the present invention to provide a modular headliner that may be readily assembled to a vehicle and has a minimum number of electrical connections to the vehicle electrical system.

It is a yet further object of the present invention to provide various components within a modular headliner which components incorporate electrical connections therein such that the mounting of one component to another effects electrical connection therebetween.

It is another object of the invention to provide a safe, economical, reliable, easy to manufacture and install wire harness for use with a modular headliner.

Other objects will be apparent from the description to follow and the appended claims.

The above objects are achieved according to a preferred embodiment of the invention by provision of a modular headliner assembly for use in a motor vehicle including components which require electrical current. The motor vehicle includes a body electrical system and the headliner has an appropriately configured substrate mounted adjacent the roof of the motor vehicle, means for mounting various components (e.g. an illuminated vanity mirror, a light, a display, a console, a garage door operator or sun roof) which require electric current to the substrate at the desired locations and the substrate defines channels extending between portions of the substrate where the components may be mounted. A wire harness is further provided which incorporates at least one electrical connection which upon assembly of the substrate to the vehicle may be connected to the body electrical system, a plurality of conductors extending from the connector to the various components for supplying electric current to the components and wherein at least a portion of said conductors are located within the channels defined by the substrate.

Also disclosed is a headliner subassembly for use with a motor vehicle which includes a molded substrate configured to conform to the interior of the motor vehicle, said substrate defining openings, various accessories requiring electric service mounted to the substrate, said substrate having a decorative covering on one side thereof and said substrate defining channels in the side not having the decorative cover, said channels extending generally between the openings in the substrate. Also included is a wire harness having a plurality of conductors, said conductors being electrically connected to a wire harness connector, said conductors being positioned in the channels to extend between openings in the substrate and wherein said conductors connected to said wire harness connector are of sufficient length to allow the wire harness conductor to extend from the substrate.

The herein invention includes not only a wire harness assembly preassembled as part of the modular headliner to all the electrical components for making the appropriate connections to the various components mounted to the headliner, but further includes the substrate which forms the base of the headliner having channels formed therein into which the conductors of the wire harness are located. Adhesive may be used to secure the conductors in the channels. In this manner, the various conductors are secured in a fixed location, which location is chosen to be protected from engagement with the various other body structural members by both the mounting of the wires within a channel in the substrate and locating the channel at an area where it may be spaced from the structural members.

By the use of a headliner wire harness, all electrical connections may be made through a single connector to the body electrical system such that the number of connections and thereby the possible number of misconnections is reduced. The body electrical system may likewise be appropriately configured to include but a single connector to mate with the modular headliner wire harness assembly.

Additionally by providing an appropriate wire harness assembly, various connectors may be located at each of the component locations such that appropriate electrical connections may be readily made to a component by engaging a component connector to a wire harness accessory connector at that location. Additionally disclosed is the incorporation of a connector directly as a part of either the console to be mounted to the headliner or a retainer for securing the console to the headliner such that the mere assembly of the console to the retainer acts to engage the component connector to a retainer connector. Furthermore the retainer connector may actually be the wire harness accessory connector mounted to the retainer.

An embodiment of the invention will now be described by way of example and with reference to the accompanying drawings.

### Brief Description of the Drawings

Figure 1 is a perspective view of a modular headliner assembly positioned adjacent the vehicle windshield opening for assembly therethrough.

Figure 1A is a sectional detail view of Figure 1 taken at the indicated line.

Figure 2 is an exploded perspective view of a modular headliner assembly and appropriate portions of the vehicle body structure.

The invention will be described with reference to a specific embodiment or embodiments hereof. It is understood that this invention has applicability with minor modifications to many vehicle lines, body styles, trim levels and structures, and it is to be anticipated that various changes can be made to the disclosed embodiments within the scope of the invention.

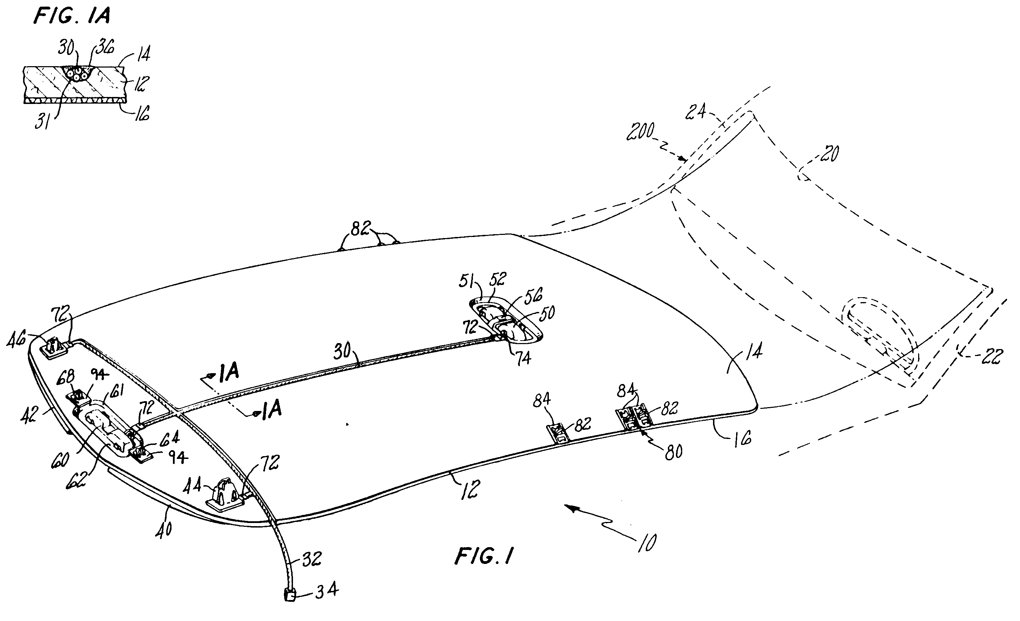

Figure 1 is a perspective view of a modular headliner assembly 10 about to be installed into motor vehicle 200. The motor vehicle is shown having windshield opening 20, left A-pillar 22 and right A-pillar 24. The modular headliner is mounted into the partially assembled vehicle through the windshield or other large window opening which could also be the rear window opening. In this manner, the body structure of the vehicle may be assembled prior to the modular headliner assembly being mounted thereto.

Modular headliner assembly 10 consists of all those components between the decorative interior surface of the headliner and the body structure of the vehicle. The modular headliner 10 must be appropriately configured such that when assembled, the modular headliner may be shipped, handled and installed in the vehicle and potentially mistreated during a portion of this process without having the interior surface damaged, without distortion or bending due to uneven stresses and without affecting the function of the various components thereof.

As may be specifically seen in Figures 1 and 1A, the headliner includes a substrate 12 made from a material such as molded fiberglass, styrene, cardboard, a polymeric material, or as is otherwise as known in the art. Substrate 12 has mounted on the surface thereof a decorative covering or surface 16 which is the surface visible to an occupant of the finished vehicle. The opposite side of substrate 12 from that on which decorative surface 16 is mounted is the non-show surface, surface 14.

Left sunshade 40 and right sunshade 42 are mounted to the substrate by the use of left sunshade fastener 44 and right sunshade fastener 46.

Additionally shown as part of the modular headliner are assist straps 80 which are retained to the modular headliner by retainers 84 interacting with assist strap legs 82.

Also shown as a portion of modular headliner 10 is center console 50 which is shown secured to retainer 52 within depressed portion 51 formed in the substrate. A mesh fastener 56 is shown located to extend upwardly from retainer 52.

Likewise, forward console 60 is shown mounted within depressed portion 61 formed in the headliner in combination with forward retainer 62. Forward retainer 62 includes an outwardly projecting area through which left inboard sunshade support 64 and right inboard sunshade support 68 extend. Appropriate retainers 94 are shown for securing the legs of the inboard sunshade supports to hold the inboard sunshade supports in position.

Further shown as part of the modular headliner is wire harness 30 having a wire bundle 32, including a vehicle electrical connector 34 and a series of accessory connectors 72 located adjacent each accessory requiring electrical connections. Complementary connectors 74 extend from each accessory and mate with accessory connectors 72 to form a completed wire harness. Vehicle electrical connector 34 is typically connected to a mating connection extending from the vehicle body electrical system in an easy to access area such as one of the A-pillars.

Additionally it may be seen that the modular headliner wire harness is secured within substrate channels 31 such that the wire is maintained therein. Additionally, adhesive 36 may be placed over the wire bundle to secure the wire bundle within the channel. In this manner, the wires are protected from inadvertent contact with roof bows or other roof structure and the potential for damage to the wires is avoided.

As may be seen in Figure 1, the modular headliner assembly is about to be inserted into the vehicle for assembly thereto. The left and right sunshade fasteners, 44 and 46, extend upwardly and include legs for engaging with the metal structure of the vehicle to mount the same thereto. Likewise, assist straps 80 have upwardly extending legs 82 which engage appropriate openings in the body structure to also secure the modular headliner to the vehicle. Furthermore, mesh fastener 56 may appropriately interact with a corresponding mesh fastener to likewise secure the headliner to the body structure. Hence, the left and right sunshade fasteners and at least one of the two assist strap handles are used for securing the modular headliner assembly to the motor vehicle. Furthermore, the mesh fastener of retainer 52 may likewise serve such a function. Also not to be ignored are the right inboard sunshade support and the left inboard sunshade support which also include legs for engaging the sheet metal structure of the vehicle.

In order to assemble the modular headliner to the vehicle, the headliner is slid through a large window opening such as a windshield opening and placed in general position to which it is to be mounted. An operator then positions one of the sunshade fasteners to feel when the fastener mates with an appropriate opening. The sunshade fastener is then snap-fitted into the opening to mount that portion of the modular headliner. The same process is then followed with the other sunshade fastener, the assist straps and the inboard sunshade supports. In this manner, the entire modular headliner may be snap-fitted to the motor vehicle. Thereafter, an appropriate electrical connection is made at vehicle electrical connector 34 and the assembly process for the headliner is complete.

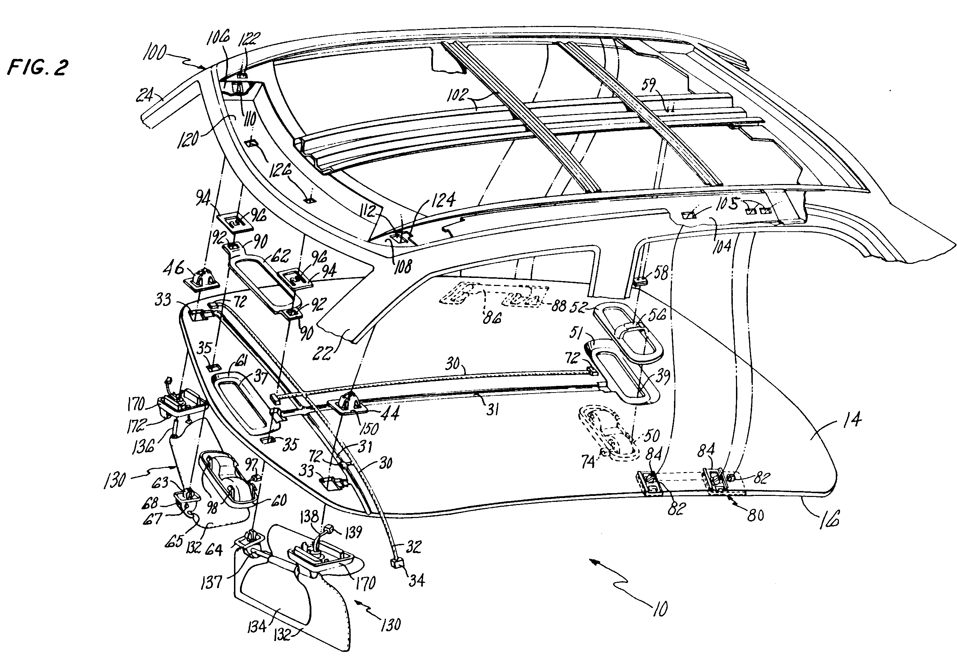

In Figure 2 an exploded view of a modular headliner about to be mounted to a vehicle body structure is shown. In this view it may be seen that modular headliner 10 incorporates many various subassemblies such that all the appropriate subassemblies are mounted to the modular headliner and such that they may be readily fastened to the vehicle body structure.

The wire harness 30 of the modular headliner assembly includes a series of accessory connectors 72 , each adapted to be connected to the appropriate electrical accessory mounted to the headliner. The wire harness assembly is further shown slightly exploded from channels 31 formed in the substrate for securing the headliner wire harness therein. This wire harness assembly is shown somewhat schematically and may, in fact, be located at different positions about the headliner, such positions being chosen for having optimum room for securing wires therein and for providing optimum space between the headliner and the vehicle body structure to prevent any accidental contact therebetween.

The center console 50 is shown having a complementary connector 74 extending therefrom for connection to accessory connector 72. Front console 60 has a complementary connector 97 and sunshade module 130 has a complementary connector 139, designed to be connected to accessory connectors 72 to form the integrated wire harness of the modular headliner assembly. The conductors may carry power to energise a component, and may carry signals to or from a component, said signals being indicative of a condition or desired state of operation of a component. Each accessory connector may be connected to a service loop of conductors to allow sufficient conductor length whereby the accessory may be removed from the substrate for service while remaining electrically connected to the wire harness. Alternatively, there may be provided means for orienting the accessory relative to the substrate opening such that assembly of the accessory to the substrate effects interconnection of the accessory connector to the complementary connector.

Center console 50 and forward console 60 are shown somewhat in schematic format. It is to be understood that these consoles may include features such as overhead lights, reading lights, displays, vanity mirrors, garage door opener compartments,switches, and other control features such that a modular headliner wire harness may include a significant number of conductors. Additionally, the sunshade modules as shown are anticipated to be sunshade modules incorporating illuminated vanity mirrors which likewise require a power supply.

Center console 50 is mounted through a substrate center module opening 39 formed in depressed portion 51 of the substrate to retainer 52 mounted on the opposite side of the substrate. Retainer 52 may have extending wings which act to distribute the load of the console over a wide area of the substrate such that uneven loading or distortion during the shipping or handling process is avoided. The substrate about the console is depressed and defines an opening therein. The console covers the end of the depression including the opening to form a neat, highly attractive module.

Mesh fastener 56 attached to a back portion of the retainer or alternatively to the console is designed to interact with mesh fastener 58 secured at location 59 to the roof bows of the vehicle body structure. This mesh retainer is preferably a Dual Lock retainer. By the selection of Dual Lock material, it is possible that the headliner may slide into position with one portion of the Dual Lock fastener sliding relative to the other. The Dual Lock fastener has the property that it does not grab and lock until the two fasteners are forced one into the other such as when the substrate is displaced upwardly locking it into its final position. Prior to such time, the headliner and the two mesh portions may be slid relative to one another to allow positioning and alignment of the headliner. This is quite different from other mesh fasteners which grab upon contact and may not thereafter be readily displaced.

Front console 60 is shown having snap legs 98 which extend upwardly through substrate front console opening 37 formed in depressed portion 61 to engage retainer 62. Retainer 62 has wings 90 which define wing openings 92. Inboard sunshade supports 64 and 68 extend with fastening legs 63 projecting upwardly through substrate openings 35, through retainer openings 92 and are secured in position by retainers 94 including spring legs 96 and, upon final assembly, extend through header openings 126 in the vehicle body structure. Each of the inboard sunshade supports 64 and 68 includes a receptacle 67 for a secondary visor and a slot 65 for receiving a primary visor. As is seen in reference to sunshade module 130, the module includes a primary visor 132 and a secondary visor 134. The primary visor is mounted on the pivot rod 136 and the secondary visor is mounted on the pivot rod 137. The sunshade module further includes fastener 44, 46 having a base 170, cover 150 and wires 138 extending therebetween. The primary visor is mounted for pivoted movement with pivot rod 136 and for rotation about the pivot rod 136 between a stored position against the headliner and a downward position to shield an occupant's eyes from sunlight entering through the windshield. When the primary visor is pivoted to block the sunlight coming through the side window, then the secondary visor may be rotated downwardly to block sunlight entering in through the windshield.

Assist straps 80 include projecting legs 84 projecting through the headliner substrate. Retainers 82 are shown in engagement with legs 84 to secure the assist straps to the headliner. An assist strap may include handle 86 and a coat hook 88, and is mounted in an appropriate position to provide a grab handle for an occupant entering or leaving the vehicle. Assist strap openings 105 are shown defined by inside rail 104 of the vehicle body structure 100. It is to these assist strap openings 105 that legs 82 engage to hold the assist strap and consequently the modular headliner in position. Fastener 44 engages the vehicle body structure through left A-pillar opening 112 formed in left A-pillar inner 108, a portion of A-pillar 22. In the same manner, right fastener 46 is inserted through the right A-pillar opening 110 of right A-pillar inner 106, a portion of right A-pillar 24. Both fasteners are likewise mounted through header left sunshade fastener 124 and header right sunshade fastener 122 openings, both being openings in header 120.

Vehicle body structure 100 as shown includes a series of roof bows 102 and the header and A-pillars as previously mentioned. Additionally, vehicle body structure 100 includes side rail 104 defining openings 105 to which the various assist strap legs may be engaged.

Hence, it may be seen from Figure 2 that the entire modular headliner assembly may be secured to the vehicle body structure with the vehicle body structure merely providing appropriately sized and positioned openings. No other structure need be added to the vehicle body structure to allow the modular headliner to be secured thereto. All the fasteners for securing the modular headliner are affixed to the modular headliner such that the vehicle assembler need only mount the modular headliner to the vehicle body structure and need not add any intermediate fastener or receptacle portions to do such except for mesh fastener 58.

The invention has been described with reference to a particular embodiment. It is to be understood by those skilled in the art that variations and modifications can be made within the scope of the invention.

## Claims

1. A modular headliner assembly (10) for use in a motor vehicle which includes an electrical system, the assembly comprising:
a substrate (12) appropriately configured to be mounted adjacent the roof of the motor vehicle, said substrate (12) defining channels (31), characterised in that said modular headliner (10) includes components requiring electric current which are mounted to the substrate (12) at various preselected locations, wherein;
the channels extend between portions of the substrate (12) where the components may be mounted; and in that the assembly further comprises:
a wire harness (30) incorporating at least one electrical connector (34) which upon assembly of the substrate (12) to the vehicle may be connected to the body electrical system, a plurality of conductors (32) extending from the connector (34) to the various components for supplying electric current to the components and wherein at least a portion of said conductors (32) are located within the channels (31) defined by the substrate (12).

2. The apparatus as set forth in claim 1 and further comprising adhesive (36) applied to the conductor (32) to secure the conductors (32) within the channels (31).

3. The apparatus as set forth in claim 1 or 2 wherein the plurality of conductors (32) includes conductors carrying power to energize a component and conductors carrying signals to a component, said signals being indicative of a condition or desired state of operation.

4. The apparatus as set forth in claim 1, 2 or 3 wherein the wire harness (30) further comprises a plurality of component connectors (72) connected to the various conductors (32), each component connector (72) being located adjacent a component such that the component connector (72) may be engaged to a mating connector associated with the component to electrically connect the component to the wire harness (30).

5. The apparatus as set forth in any preceding claim wherein the motor vehicle includes an A-pillar and wherein the wire harness connector (72) extends from the substrate (12) to be connected to the vehicle electrical system at the A-pillar.

6. The apparatus as set forth in any preceding claim, wherein the substrate (12) is moulded and configured to conform to the interior of a motor vehicle, said substrate (12) defining openings (33, 37, 39) to which various accessories requiring electric service may be mounted, said substrate (12) having a decorative covering (16) on one side thereof and said substrate (12) defining channels (31) on the side (14) not having the decorative covering, said conductors (37) connected to said wire harness connector (34) being of sufficient length to allow the wire harness conductor (32) to extend from the substrate (12).

7. The apparatus as set forth in claim 5 or 6 and further comprising accessory connectors (72) mounted to the conductors (32) at each opening (33, 37, 39) for the receipt of any accessory.

8. The apparatus as set forth in claim 7 and further comprising an accessory mounted to an opening (33, 37, 39) in the substrate (12) and said accessory including a complementary connector electrically connected to the accessory, said complementary connector being connected to the accessory connector (72) to electrically connect the wire harness (30) to the accessory.

9. The apparatus as set forth in claim 8 and further comprising means for mounting the accessory connector (72) relative to the substrate opening (33, 37, 39) and means for orienting the accessory relative to the substrate opening (33, 37, 39) such that assembly of the accessory to the substrate (12) effects interconnection of the accessory connector (72) to the complementary connector (72, 74).

10. The apparatus as set forth in claim 8 or 9 wherein said wire harness (30) further comprises a service loop provided in the conductors to allow sufficient conductor length whereby the accessory may be removed from the substrate (12) for service while remaining electrically connected to the wire harness (30).

## Patentansprüche

1. Modulare Dachauskleidungsanordnung (10) zur Verwendung in einem Kraftfahrzeug, welches eine elektrische Anlage enthält, wobei die Anordnung folgendes umfaßt:
- ein geeignet konfiguriertes Substrat (12) zum Anbau am Dach des Kraftfahrzeugs, wobei das Substrat (12) Kanäle (31) begrenzt, dadurch gekennzeichnet, daß die modulare Dachauskleidung (10) elektrischen Strom benötigende Komponenten enthält, welche im Substrat (12) an verschiedenen Stellen eingebaut sind, wobei die Kanäle zwischen Abschnitten des Substrats (12) verlaufen, wo die Komponenten angebracht werden können; und dadurch, daß die Anordnung des weiteren umfaßt:
- einen Kabelsatz (30) mit mindestens einem elektrischen Steckverbinder (34), welcher bei der Montage des Substrats (12) im Fahrzeug mit der elektrischen Anlage der Karosserie verbunden werden kann, wobei aus dem Steckverbinder (34) eine Vielzahl von Leitern (32) zu den verschiedenen Komponenten geführt ist, um diese mit elektrischem Strom zu versorgen, und wobei mindestens ein Abschnitt dieser Leiter (32) innerhalb der durch das Substrat (12) begrenztem Kanäle (31) angeordnet ist.

2. Vorrichtung gemäß Anspruch 1, welche außerdem einen auf die Leiter (32) aufzubringenden Kleber (36) zur Sicherung der Leiter (32) innerhalb der Kanäle (31) umfaßt.

3. Vorrichtung gemäß Anspruch 1 oder 2, bei der die Vielzahl der Leiter (32) spannungsführende Leiter zur Versorgung einer Komponente und signalführende Leiter zu einer Komponente enthält, wobei diese Signale einen Zustand oder einen gewünschten Betriebszustand melden.

4. Vorrichtung gemäß Anspruch 1, 2 oder 3, bei der der Kabelsatz (30) des weiteren eine Vielzahl von mit den verschiedenen Leitern (32) gekoppelten Komponentensteckverbindern (72) umfaßt, wobei jeder Komponentensteckverbinder (72) so neben einer Komponente angeordnet ist, daß der Komponentensteckverbinder (72) mit einem der Komponente zugehörigen Anschlußteil gekoppelt werden kann, um die elektrische Verbindung der Komponente mit dem Kabelsatz (30) herzustellen.

5. Vorrichtung gemäß einem der vorstehenden Ansprüche, bei der das Kraftfahrzeug eine A-Säule enthält, und bei der der Kabelsatz-Steckverbinder (72) aus dem Substrat (12) herausgeführt ist, um an die elektrische Anlage des Fahrzeugs an der A-Säule angeschlossen zu werden.

6. Vorrichtung gemäß einem der vorstehenden Ansprüche, bei der das Substrat (12) geformt und in Übereinstimmung mit dem Innenraum eines Kraftfahrzeugs konfiguriert ist, wobei das Substrat (12) Öffnungen (33, 37, 39) begrenzt, an denen verschiedene Hilfseinrichtungen angebaut werden können, welche elektrische Versorgung benötigen, das Substrat (12) auf einer Seite mit einer Dekorabdeckung (16) und auf der die Kanäle (31) begrenzenden Seite (14) ohne Dekorabdeckung ausgeführt ist, und wobei die mit dem Kabelsatz-Steckverbinder (34) elektrisch gekoppelten Leiter (32) hinreichend lang sind, um die Herausführung des Kabelsatzleiters (32) aus dem Substrat (12) zu gestatten.

7. Vorrichtung gemäß Anspruch 5 oder 6 , welche des weiteren Hilfsgeräte-Steckverbinder (72) umfaßt, die an den Leitern (32) an jeder Öffnung (33, 37, 39) zur Kopplung beliebiger Hilfs- oder Zusatzeinrichtungen angebracht sind.

8. Vorrichtung gemäß Anspruch 7, welche des weiteren eine an einer Öffnung (33, 37, 39) im Substrat (12) angebrachte Hilfs- oder Zusatzeinrichtung umfaßt, wobei diese Hilfs- oder Zusatzeinrichtung einen mit dieser elektrisch verbundenen zusätzlichen Steckverbinder enthält, welcher mit dem Zusatzeinrichtungs-Steckverbinder (72) gekoppelt ist, um den Kabelsatz (30) elektrisch mit der Hilfs- oder Zusatzeinrichtung zu verbinden.

9. Vorrichtung gemäß Anspruch 8, welche des weiteren eine Einrichtung zur Aufnahme des Zusatzeinrichtungs-Steckverbinders (72) in Bezug auf die Substratöffnung (33, 37, 39) sowie eine Einrichtung zur Ausrichtung der Hilfs- oder Zusatzeinrichtung relativ zur Substratöffnung (33, 37, 39) in der Weise, daß die Montage der Hilfs- oder Zusatzeinrichtung im Substrat (12) die Verbindung des Zusatzeinrichtungs-Steckverbinders (72) mit dem zusätzlichen Steckverbinder (72, 74) bewirkt.

10. Vorrichtung gemäß Anspruch 8 oder 9, bei der der Kabelsatz (30) weiterhin eine in den Leitern vorgesehene Service-Schleife umfaßt, um eine hinreichende Leiterlänge zu bieten, so daß die Hilfs- oder Zusatzeinrichtung zur Wartung aus dem Substrat (12) herausgezogen werden kann, während sie elektrisch mit dem Kabelsatz (30) verbunden bleibt.

## Revendications

1. Assemblage de garniture de toit modulaire (10) pour utilisation dans un véhicule automobile qui comprend un système électrique, l'assemblage comprenant:
un support (12) configuré de façon appropriée pour être monté adjacent au toit du véhicule automobile, ledit support (12) définissant des canaux (31), caractérisé en ce que ladite garniture de toit modulaire comprend des composants requérant un courant électrique, qui sont montés sur le support (12) en différentes positions présélectionnées dans lequel :
les canaux s'étendent entre des parties du support (12) où les composants peuvent être montés ; et en ce que l'assemblage comprend de plus :
un câblage électrique (30) incorporant au moins un connecteur électrique (34) qui, lors de l'assemblage du support (12) sur le véhicule peut être connecté au système électrique de la carrosserie, une pluralité de conducteurs (32) s'étendant à partir du connecteur (34) vers les différents composants pour fournir le courant électrique aux composants et dans lequel au moins une partie desdits conducteurs (32) sont situés à l'intérieur des canaux (31) définis par le support (12).

2. Dispositif selon la revendication 1 et comprenant, de plus, un adhésif (36) appliqué au conducteur (32) pour fixer les conducteurs (32) à l'intérieur des canaux (31).

3. Dispositif selon la revendication 1 ou 2 dans lequel la pluralité des conducteurs (32) comprend des conducteurs transportant l'énergie pour activer un composant et des conducteurs transportant des signaux à un composant, lesdits signaux étant indicateurs d'une condition ou d'un état souhaité de fonctionnement.

4. Dispositif selon la revendication 1, 2 ou 3 dans lequel le câblage électrique (30) comprend, de plus, une pluralité de connecteurs de composants (72) reliés aux différents conducteurs (32) , chaque connecteur de composants (72) étant situé à côté d'un composant de telle sorte que le connecteur de composant (72) peut être engagé avec un connecteur de raccordement associé au composant pour relier électriquement le composant au câblage électrique (30).

5. Dispositif selon l'une quelconque des revendications précédentes dans lequel le véhicule automobile comprend un pied-droit-A et dans lequel le connecteur de câblage électrique (72) s'étend à partir du support (12) pour être connecté au système électrique du véhicule au niveau du pied-droit-A.

6. Dispositif selon l'une quelconque des revendications précédentes dans lequel le support (12) est moulé et configuré pour se conformer à l'intérieur d'un véhicule automobile, ledit support (12) définissant des ouvertures (33, 37, 39) sur lesquelles différents accessoires requérant un branchement électrique peuvent être montés , ledit support (12) ayant un habillage décoratif (16) sur un de ses côtés et ledit substrat (12) définissant des canaux (31) sur le côté ne recevant pas l'habillage décoratif,
lesdits conducteurs (37) reliés audit connecteur de câblage électrique (34) étant de longueur suffisante pour permettre au conducteur du câblage électrique (32) de s'étendre à partir du support (12).

7. Dispositif selon la revendication 5 ou 6 et comprenant, de plus, des connecteurs d'accessoires (72) montés sur les conducteurs (32) au niveau de chaque ouverture (33, 37, 39) pour la réception de tout accessoire.

8. Dispositif selon la revendication 7 et comprenant, de plus, un accessoire monté sur une ouverture (33, 37, 39) du support (12) et ledit accessoire comportant un connecteur complémentaire relié électriquement à l'accessoire, ledit connecteur complémentaire étant relié au connecteur d'accessoire (72) pour connecter électriquement le câblage électrique (30) à l'accessoire.

9. Dispositif selon la revendication 8 et comprenant , de plus, un moyen pour monter le connecteur d'accessoire (72) relativement à l'ouverture du support (33, 37, 39) et un moyen pour orienter l'accessoire par rapport à l'ouverture du support (33, 37, 39) de telle sorte que l'assemblage de l'accessoire sur le support (12) effectue une interconnexion du connecteur d'accessoire (72) au connecteur complémentaire (72,74).

10. Dispositif selon la revendication 8 ou 9 dans lequel ledit câblage électrique (30) comprend ,de plus, une boucle de branchement prévue dans les conducteurs pour permettre une longueur de conducteur suffisante de façon que l'accessoire puisse être déplacé du support (12) pour un entretien tout en restant connecté électriquement au câblage électrique (30).
